# EUROPEAN PATENT APPLICATION

(11) **EP 2 680 208 A1**
(43) Date of publication of application: **01.01.2014**
(21) Application number: 12174400.7
(22) Date of filing: 29.06.2012
(51) Int. Cl.: G06Q 30/02

(54) **Method and system for controlling the access to information in a social network**

(71) Applicant: Technische Universität Darmstadt, 64283 Darmstadt (DE)
(72) Inventor: Kauer, Michaela, 64579 Gernsheim (DE); Franz, Benjamin, 64287 Darmstadt (DE); Heine, Martin, 63322 Rödermark (DE); Pfeiffer, Thomas, 63225 Langen (DE); Delphine, Christin, 64285 Darmstadt (DE)
(74) Representative: Stumpf, Peter

(57) **Abstract**

A method (12) for controlling the access to information in a social network (1) is suggested, wherein information will be accessible by different users (4, 5) based on a social distance value that is assigned to each user (4, 5), wherein the user (4) providing said information decides on a limiting social distance value, wherein users (5) having a lower social distance value have access to said information and wherein users (5) having a higher social distance value do not have access to said. In addition to this, the user (4) providing said information can modify the access permission individually on a user-by-user (5) basis.

## Description

The invention generally relates to social networks. In particular, the invention relates to a method for controlling the access to information in a social network. Furthermore the invention relates to a social network system, a computer program product and a device used for providing a social network system functionality.

Social networks have dramatically developed in the recent years, both with respect to functionality and with respect to the number of users and information shared by said users.

Generally speaking, social networks provide the users with the opportunity to get into contact with each other. Every user is invited to generate a profile with various types of information that can be accessed by other users. Popular examples for such social networks are MySpace, Facebook and Google+ on the more private level and Linkedln and XING on the more professional level.

Examples of information that can be part of a profile are the name, birthday, previous work experience, hobbies and interests, political views, religious views, interests (both workwise and on a personal level), current relationship status, current activities, sharing of web links, pictures, postings on pin boards, current location of the user, a photo album or the like.

Since some users are closer to a particular user who has an account, while others are more distant, there is a desire that not every piece of information is distributed to every user. As an example, while said user feels comfortable that some very rudimentary information like e-mail address, name and age is distributed to everybody, he might feel uncomfortable to share information about political or religious views, his current address and telephone number and so on with the whole world. Therefore, most social networks provide the possibility to define certain groups and to associate every user with a certain group. The members of these groups have varying access to the overall profile information. Furthermore, usually only acknowledged connections (sometimes referred to as first grade connections) have access to certain information. However, experience has shown that users generally do not believe in such fixed schemes. Reality shows, that sometimes a subgroup of persons from the same group should gain access to a particular piece of information, while others should not. Therefore, the acceptance of such coarse groups is comparatively low by experience. Furthermore, the definition of such groups is not very suitable to changing social contacts. In real life, some people become closer to somebody, while others become more distant. Keeping track of such changes is quite complicated and tedious with a number of such predefined groups.

Another approach is that a user has to define who is allowed to see a certain type of information on a user-by-user level. However, this is a very tedious task as well and people tend to not to use sufficient time to really think about with whom to share information and with whom not to share information. Therefore, the access to information set up this way quite often does not reflect the "real life" situation appropriately. As in the above mentioned case, such a scheme also does not appropriately reflect changing depth of social contacts.

It is therefore the object of the invention to suggest an improved method for controlling the access to information in a social network. Other objects of the invention are to provide an improved social network scheme, a computer program product with an improved method for controlling the access to information in a social network and a device, implementing an improved method for controlling the access to information in a social network.

The present invention solves these objects.

It is suggested to perform a method for controlling the access to information in a social network, wherein information will be accessible by different users based on a social distance value that is assigned to each user, wherein the user providing said information decides on a limiting social distance value, wherein users having a lower social distance value have access to said information and wherein users having a higher social distance value do not have access to said information, in a way that the user providing said information can modify the access permission individually on a user-by-user basis. This way the user can manage the access to his profile information, in particular to newly added information, in a very efficient way. However, it is also possible that already existing information will be managed as proposed. In particular, it is possible that the user sharing the information will be mandatorily asked to define the access scheme (in particular if he adds new information; with existing information he might be asked on a random pattern and/or from time to time (some kind of "password ageing") about the access scheme). While he first makes a rough preselection by defining a limiting social distance value, he will get some kind of an automated suggestion on who should be allowed to access the information, and who not. This is somewhat similar to the idea of assigning different users to different user groups and allowing only certain user groups to access (newly added) information of the user profile. Nevertheless, according to the present proposal the user will still be allowed to make a fine tuning by individually selecting and/or unselecting certain users from access to the information in question. It is both possible that a person will initially be provided with access to the information by the automated procedure (according to the limiting social distance value), but will be unselected by the profile holder afterwards, while additionally or alternatively a person who will initially be excluded from the information by the automated procedure may gain access by the individual modification by the profile holder afterwards backspace. This comes closer to "real life", where the decision on who will get a particular piece of information, and who not, is done on a more elaborate level as opposed to an allocation of persons to a very limited number of groups. As an example, usually family members will have full access to a person's profile. Nevertheless, if a person starts to date a new girlfriend/boyfriend, he or she might want to conceal this particular information even from family members in the beginning of the relationship, while he or she feels a necessity to share this information with a close friend. The social distance value can be assigned or calculated by a certain algorithm in essentially any thinkable way. As an example, a social distance value can be realised by defining and allocating users to a limited number of individual groups like close friends, family members, more distant friends, acquaintances and the like. However, it is also possible that a more "fine tuned" number (or even an array of numbers) is used as a social distance value, wherein this (these) value(s) can be derived from an assignment into a group, past communications, previous access permissions or the like, as it will be elucidated in more detail later on. Of course, it is also envisaged by the invention to "reverse" the social distance value into some kind of a "social closeness value" (or the like), where the presently given description, suggestions and definitions have to be amended appropriately.

Additionally and/or alternatively it is suggested to perform a method for controlling the access to information in a social network, wherein information will be accessible by different users based on a social distance value that is assigned to each user, wherein the user providing said information decides on a limiting social distance value, wherein users having a lower social distance value have access to said information and wherein users having a higher social distance value do not have access to said information, in a way that the decision on the limiting social distance value and/or said individual modification of the access permission is performed using graphical means, in particular a graphical representation of the social distance value and/or a graphical representation of the users of the social network. As mentioned above, this can be particularly useful for newly added information and/or the management of the access scheme might be mandatory. Experience shows that the human eye is able to process a huge quantity of information very fast and intuitively, if an appropriate graphical representation is given. Such a graphical representation is different from and superior to providing checkboxes with individual usernames, a number of questions (or the like) together with checkboxes to be selected or unselected or with radio buttons, making it able to select one (or presumably more) out of a variety of given possibilities. Nowadays computer hardware makes it possible to generate and display even very elaborate graphical images very fast and inexpensively. The graphical representation can be both static and/or dynamic. In particular, a static representation can be a representation that is only modified (if at all), if a certain selection has been made, a command has been given or the like. A dynamic graphical representation can be in particular a graphical representation that is changing when the mouse will be used (or even a "fully automated" change that is made without any user intervention). In any case, such a graphical representation will provide a more user-friendly and more intuitive way for interrogating the profile owner about whom to give access to a certain piece of information. By providing such a more user-friendly method, the acceptance by the respective user will usually dramatically increase, so that a much better control about the access to his user profile will be achieved. This is of particular advantage.

A preferred embodiment of the method will be achieved, if said individual modification of the access permission of a certain user will modify the social distance value of said user. This modification can be done quasi-continuously or in steps, in particular once a certain number of individual modifications that are deviating from the "automated proposal" have been made by the profile holder. This way, reality is better reflected, in which a social distance and/or a social closeness to a certain person will change with time and sometimes even without a profile user noticing such a gradual change in social distance/social closeness. Furthermore, this suggestion can relieve the profile holder from the sometimes difficult question on reassigning a person to a certain group, i.e. by "rating him up" or "grading him down". The difficulty can be both on a conscious level ("Is this person already a close friend?") and/or on an emotional level (e.g. after a break-up). This can have the appropriate advantages, of course.

Preferably, the social distance value used for said method comprises at least one essentially continuous number. Using such an essentially continuous number, the more gradual development of personal relationships with time that is normally present in reality, can be better reflected by the social network. This is of course an advantage.

Furthermore it is suggested that said social distance value is a multi-dimensional value and preferably comprises additional information about certain types of information that can be shared, past communications, common interests and/or already shared information. This way, the subtleness of human relations can be better reflected by the proposed method. Therefore, the "automated proposals" will usually have a better quality so that the number of individual modifications will usually be reduced and/or will be usually very low. This will, in consequence, reduce the workload of the profile holder, increasing the acceptance of reviewing the automated proposals. Therefore, the acceptance of the overall social network can be increased. As an example, a profile holder might have two similarly close friends (e.g. they have the same overall social distance that is comparatively low). Nevertheless, he might tend to share more information about a current relationship with one of those friends, while he tends to share more information about political views or his monetary situation with the other close friend. If the social distance value is not only a single "magnitude" number but an array of numbers (some kind of a "vectorial value") these differences can be reflected by the presently proposed method. The different information that is contained in such an "information vector" can be used for a variety of purposes, for example for the "automated proposal" with whom the information will be shared or not (which can be modified, of course) and/or for purposes of a graphical representation. In any case, the presently proposed method will usually be more user-friendly. The dependence on already shared information can also include an influence that is based on the particular type of information that is shared (therefore presumably generating even more "dimensions"). For example, the type of information can be pin board entries, sharing of current location, shared pictures or the like. Furthermore, a type of information can be subdivided into subgroups as well. As an example, pictures can be subdivided in pictures taken on vacation, pictures taken at work, humoristic pictures or the like.

Furthermore, it is suggested to perform the method in a way that second level connections are used for a modification of the limiting social distance value, for a modification of the social distance value and/or for influencing a graphical representation. Experience shows that typically a person (for example the profile holder) that has two friends which are also friends on their own will typically share more information with these two persons as opposed to two friends that are not interconnected with each other. However, sometimes the contrary might be true as well. If this information is used for the proposed users (or even more users) the quality of the presently proposed method will typically increase. In particular, when taking second level connections into account, the quality of the preselection proposals will usually increase. This again can result in an improved acceptance of the method.

It is possible that the method is performed in a way that an individual modification of access permission immediately alters the graphical representation and/or the limiting social distance value and/or the social distance value. This way, a more "interactive" method can be realised. Such an increased "interactivity" is typically preferred by users. However, for a certain group of users, the contrary might be true, as well. Additionally, it might be advantageous for the provider of a social network to only update the social distance value from time to time (perhaps every six hours or daily, or if sufficient system resources are available). This way, the performance of the system can be enhanced.

In particular it is proposed to perform the method in a way that the social distance value is graphically represented by a size of an icon, by a distance of an icon from a certain (in particular a pronounced and/or centrally located) position (presumably defined by an icon), by a colour of an icon, by a shape of an icon, by an angular position of an icon, by at least one lateral position of an icon and/or by a histogram. First experiments have shown that such graphical representations are very intuitive for most users. Therefore, the use of such representations typically proves to be advantageous.

Furthermore, it is suggested that the method is performed in a way that the limiting social distance value is graphically represented by an area and/or by a volume, by at least one bordering line, by at least one slide bar and/or by at least one icon. First tests have shown that such a representation is particularly accepted by most users, thus forming a very user-friendly, intuitive interface for most users.

Furthermore it is suggested to perform the method in a way that additional information can be temporarily displayed. As an example, an icon might be enlarged, so that more information about a person that is represented by said icon is displayed if the mouse pointer is moved above the respective icon. However, the icon will usually deflate again, when the mouse pointer is moved further on (and/or after some time). The same functionality might be useful, when a "bordering line" crosses the respective user icon. This way, the user-friendliness of the system can be even more increased, at least for most users. This can result in an even higher acceptance of the system. It should be mentioned that it might be advantageous if an icon usually or generally contains some kind of information about the user. As an example, the icon might show a picture of the user and/or a profile picture that was chosen by the respective user.

Preferably the method is performed in a way that the social distance value is a directional social distance value. This reflects reality, where a first person considers a second person to be a very close friend, while the second person considers the first person to be only a more distant friend, for example. Of course, this does not exclude that in a certain number of cases (and perhaps even in more or even in all cases) the social distance value might be the same or might be approximately the same.

Preferably, the method is realised as a computer implemented method. This way, the method can be performed very effectively. A computer implemented method does not necessarily mean that all steps of the method are performed on a single computer. Instead, according to a typical embodiment of the invention, different steps of the method will be performed on different computers that are interconnected by a (normally temporal) network. The interconnection can be made, as an example, by the Internet, WLAN, mobile phone connections and/or the like. In particular, client computers do not have to be connected to a server computer all the time. Instead, typically only temporal connections between clients and servers will be made for performing the method.

Furthermore, a social network system is proposed that is arranged for implementing a method as previously described. This way, the resulting social network system will have the same features and advantages, as previously described. Furthermore, the social network system can be modified according to the suggestions made, at least in analogy.

Furthermore, a computer program product comprising code instructions for carrying out the method as described, when loaded and run on a computer means, is suggested. With such a computer program product, the features and advantages of the presently proposed method can be realised as well, at least in analogy.

Furthermore, a device, in particular a computer means, being designed and arranged in a way to perform the presently proposed method is suggested as well. This way, the device will show the features and advantages according to the presently given description, at least in analogy, as well.

It should be mentioned that the social network system, the computer program product and the device (computer means) can be sort of "split up" in a way that different parts of the method are employed on different devices, are coded into different computer program product subparts and the like.

The present invention and its advantages will become more apparent, when looking at the following description of possible embodiments of the invention, which will be described with reference to the accompanying figures, which are showing:
- Fig. 1:: a schematic representation of a social network arrangement;
- Fig. 2:: a flowchart showing a possible embodiment of a method of adding information to a social network and associating access privileges to said information;
- Fig. 3:: a first embodiment of a graphical user interface for assigning access privileges to a piece of information;
- Fig. 4:: a second embodiment of a graphical interface for assigning access privileges to a piece of information;
- Fig. 5:: a third embodiment of a graphical user interface for assigning access privileges to a piece of information;
- Fig. 6:: a fourth embodiment of a graphical user interface for assigning access privileges to a piece of information.

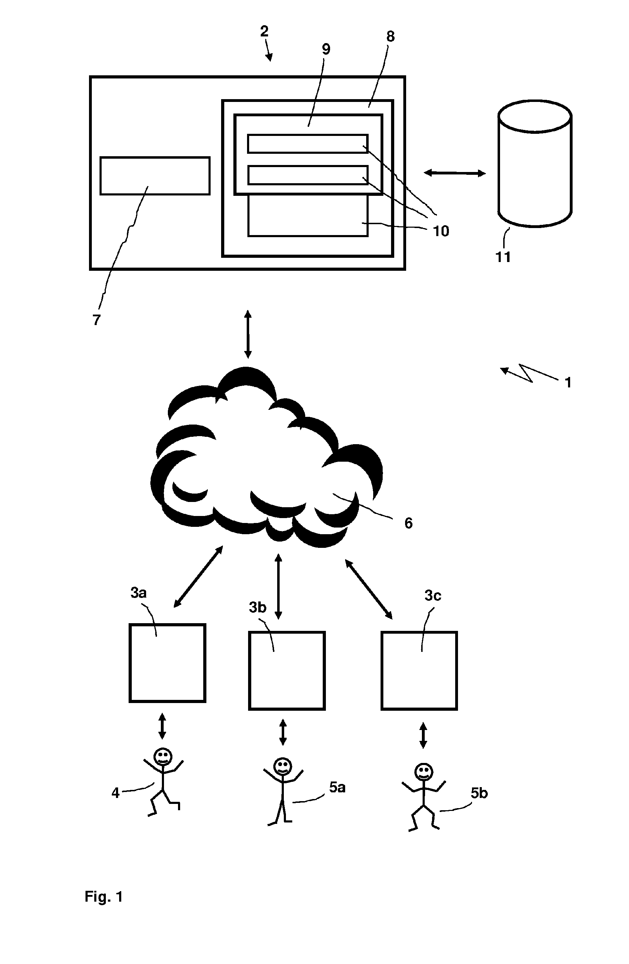

In Fig. 1 a schematic overview of a preferred arrangement of a social network arrangement 1 is shown. The social network arrangement 1 comprises a server computer 2 and a plurality of client computers 3 (presently three client computers 3a, 3b and 3c are shown, although a different number of client computers 3 is possible as well, of course). The client computers 3 can be of varying design. For example a client computer can be a laptop, a desktop computer, an Internet terminal (including a public Internet terminal), a smart phone, a pocket computer, a tablet computer, a netbook or the like. The client computers 3 are operated by individual users 4, 5 that are accessing the social network arrangement 1 using the clients 3.

It has to be noted that it is not necessary that some kind of a unique connection between a certain client 3 and a certain user 4, 5 is present. Instead, a single user 4, 5 can use a plurality of clients (for example a desktop computer, a laptop computer, a smart phone and/or a public Internet terminal) interchangeably. On the other hand it is also possible that a single client 3 is used by a plurality of users 4, 5, like it is the case with a desktop computer in a household and/or a public Internet terminal, as an example.

In the presently shown example, a user 4 is uploading information that is to be (partially) shared with other users 5 using the social network arrangement 1. The other users 5 are presently users that are seeking to access information from the user profile of the user 4 sharing information.

It has to be noted that the situation may change (and actually usually does), so that an accessing user 5 will become an information sharing user 4 and vice versa. This is actually the standard situation with social network arrangements 1.

The clients 3 are (possibly) connected with the other clients 3 and in particular with the server 2 via a network 6. The network 6 can be the Internet, a WLAN access system, a DSL connection, a mobile phone network and/or combinations of those. While the connection between the server 2 and the network 6 is usually permanent, it is quite customary that the connections between the clients 3 and the network 6 are only established for certain time spans.

The server 2 (which can be an arrangement of different computers that are interconnected to each other, like a workstation farm; other arrangements are possible as well) typically comprises a processor 7 and a memory 8 (usually a RAM = random access memory; an electronic memory for performing operations and calculations), into which a program 9 with a plurality of program modules 10 is loaded. The server 2 is connected to a database 11, for example an arrangement of hard disk drives with an appropriate electronic controller (for example a RAID-5 station).

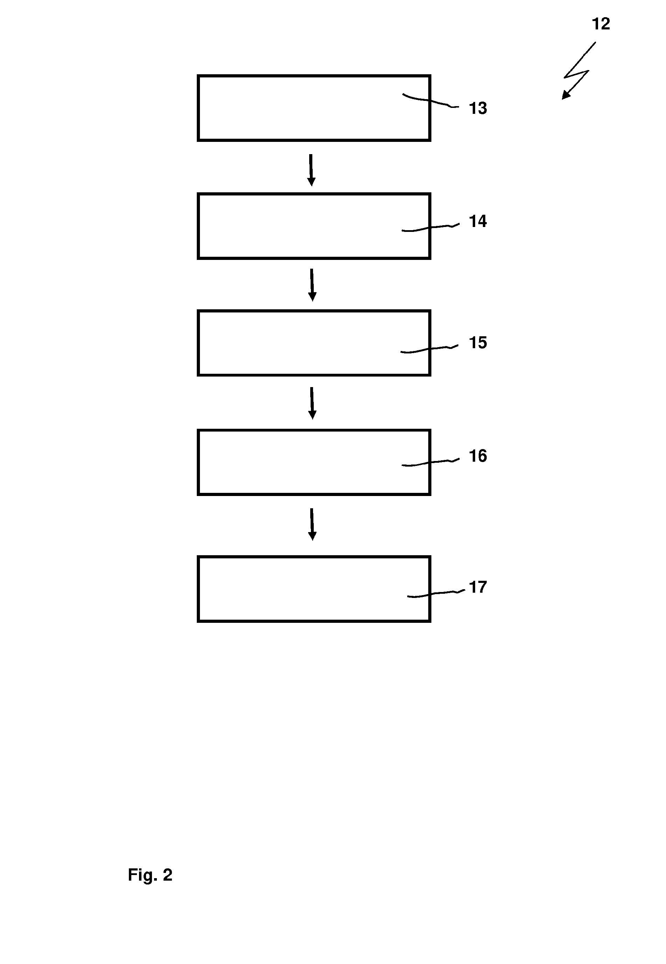

Now, with additional reference to Fig. 2, a process is described in which a user 4, seeking to upload and to share information into the social network arrangement 1 is guided through the upload and setup phases, so that the uploaded information is only accessible by an appropriate selection of users 5. This process is illustrated as a schematic flowchart 12 in Fig. 2.

The user 4, intending to add data to his user profile uses a client 3 to log into the social network arrangement 1. This can be done by first of all entering information to the local client 3 which is consequently transmitted to the server 2. However, it is also possible ― and presently preferred ― that the user 4 logs "into the server 2" via a web interface, using for example an Internet browser like Microsoft's Internet Explorer, the Firefox browser, the Google Chrome browser or the like. Such a design has the particular advantage that no software needs to be installed on the client 3. This is particular advantageous for public terminal computers. Nevertheless, in particular in case smart phones are used, a small local computer program, a so-called app, might prove to be useful, as well.

When the user 4 sends out a request for adding information (step 13 in flowchart 12) the server 2 will generate an input mask that is suitable to the type of information to be added. As an example, if the user wants to add some text information, some personal information or the like, a text box to be filled in might be displayed on the client 3. Of course, in particular with a certain type of information (like a birthday date or with parts of an address), a user might be given a choice from a couple of pre-prepared clickable switches or the like. If data files (for example pictures, sound files, documents or the like) are to be uploaded, a data path, where the information is located on the client computer 3 is usually displayed (typically together with some text fields for entering additional information).

The thus prepared data entry mask is displayed to the user 4 (step 14), filled in by the user 4, and the upload will be acknowledged, for example by hitting an "okay"-button.

Following this, the respective information is uploaded (step 15) to the server computer.

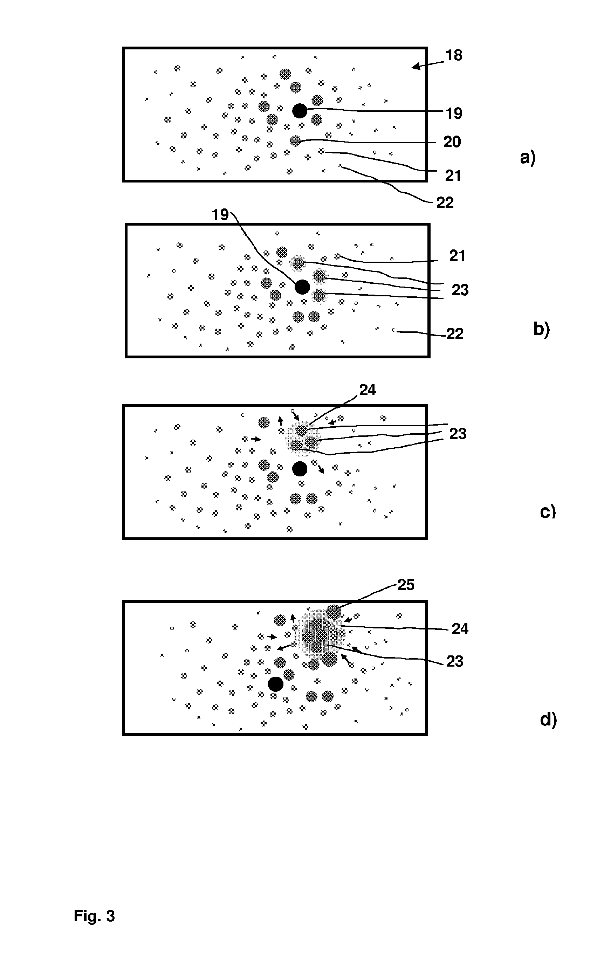

Following the upload step 15, the user will be asked using a graphical display about the sensitivity of the uploaded information, i.e. about the user groups/users to which the uploaded information will be accessible (step 16). Preferably, the graphical display will be according to one of the particularly preferred embodiments, as shown in Figs. 3 to 6. More details about such graphical displays will be elucidated later on. Particularly preferred, the user can make a choice on his own which method will be used for this. Such a selection can be made in a setup step of the user profile, for example. Offering such a choice, the resulting system will usually be particularly user-friendly.

Based on the information given, the information will be stored (together with information about access privileges) into the database 11 (step 17). Now the uploading process is completed and the user 4 can continue, as desired. For example, he can add another piece of information, add, review and/or edit the uploaded information (or other pieces of information), accessing information from other users 5 or simply log out.

It should be mentioned that some alterations to the proposed flowchart 12 are possible, of course. As an example, the uploading step 15 and the step in which it is defined with whom the uploaded information will be shared (step 16) might it be interchanged.

Now, a first possible graphical display for determining the access scheme for some information that has been added will be described more closely with reference to Fig. 3.

When the user 4 has finished uploading the information, he will be interrogated by the social network program about the question to whom the information will be accessible. According to a first possible embodiment, the user will be shown a graphical display 18 as shown in Fig. 3a. In the middle of the screen, a uniquely coloured dot 19 (for example a red dot) will be displayed, symbolising the uploading user 4 himself. Around his own dot 19, a couple of other dots 20, 21, 22 are displayed. In the presently shown example, the other user dots 20, 21, 22 are arranged with a different size and with a different radial distance from the central dot 19. The closer a dot 20, 21, 22 is to the central dot 19 and the larger the respective dot 20, 21, 22 is, the closer the respective user 5 is connected to the uploading user 4 (and consequently the social distance value will be accordingly small). Such a social distance can be calculated according to the proposal made in European patent EP 2 077 522 A1, for example. However, the presently proposed method (and the other proposed methods as well) are not restricted to the therein proposed method.

As one can see, the social network of the uploading user 4 (central dot 19) consists of closer friends 20, more distant friends 21 (work colleagues or the like) and only acquaintances 22, as an example. However, it should be noted that the size and the distance of the other user dots 20 to 22 are changing continuously, i.e. not only three different "levels of friendship" exist.

In the presently shown embodiment, all different dots of other users 20, 21, 22 are shown in the same colour, namely grey. However, it is also possible to use varying colours and/or different degrees of greyness (or the intensity of the respective colour).

Now, the user 4 will make a manual preselection by clicking several single contacts (dots of other users 20, 21, 22). Preferably, he chooses at least two users. Quite likely, he will choose users that are more closely connected to him (i.e. larger dots/dots that are near the central dot 19). To aid him in the preselection process, he will be given additional information about the respective user, if he moves the mouse pointer over a certain dot 20, 21, 22, representing a certain user. If he moves further on, the respective information will disappear again. In Fig. 3b the uploading user 4 has manually preselected three users 23.

These preselected users 23 will dynamically attract each other (like "magnets") so that they will end up close to each other (Fig. 3c), forming some kind of a cluster. Furthermore, the preselected contacts will be covered by a cluster area that is identical to a selection area 24 initially. The selection area 24 symbolises to whom the uploaded information will be displayed. In the presently shown embodiment, every user dot 23 that is covered by the selection area 24 will gain access to the information, while all other uses will not have access to the respective information.

If the uploading user 4 continues to preselect other uses 23, more preselected user dots 23 will move to this cluster and will be covered by this selection area 24.

As an additional tool, even user dots 20, 21, 22 that have not been preselected but who have some "features" in common with the preselected users will move in the direction of the preselected cluster (but will remain outside of it, at least for the moment). This is indicated by arrows in Fig. 3c. "Features" that can be considered are, as examples, friendship connections (on the second level, i.e. between other users 5), past e-mail communication, past chat connections, common interests, link to pictures, previously shared information or the like. With respect to previously shared information, an example might elucidate the process: somewhat earlier, information of a certain type (for example pictures, taken at a vacation) has been shared by user A with users B, C and D. If similar information is uploaded next time, and user B is selected during the preselection process, users C and D will automatically move close to user B.

As a rule of thumb, the more preselected users 23 have been chosen, the better the quality of the suggestions (i.e. the users inside the cluster and the users in the vicinity of the preselection cluster) will be.

At a certain point, the user will stop preselecting individual users 23 and will start to increase the size of the selection area 24, as it is shown in Fig. 3d. Therefore, the uploading user 3 can speedily and easily allow other users 5 to gain access to the respective information. As an additional aid to the uploading user 4, as soon as the outer borderline of the selection area 24 passes over a certain user dot 25, the respective user dot 25 will enlarge and the name of the respective user will be displayed. If the borderline of the selection area 24 has passed over the respective user dot 25, the user dot will deflate again to its normal size. Of course, it is still possible that even now the uploading user 4 can manually select and/or unselect individual users by simply clicking on the respective user dot 20, 21, 22.

As an alternative approach (not indicated here), the user can start from his own dot 19 and simply define a selection area 24 around himself (i.e. his own dot 19) by dragging the mouse pointer.

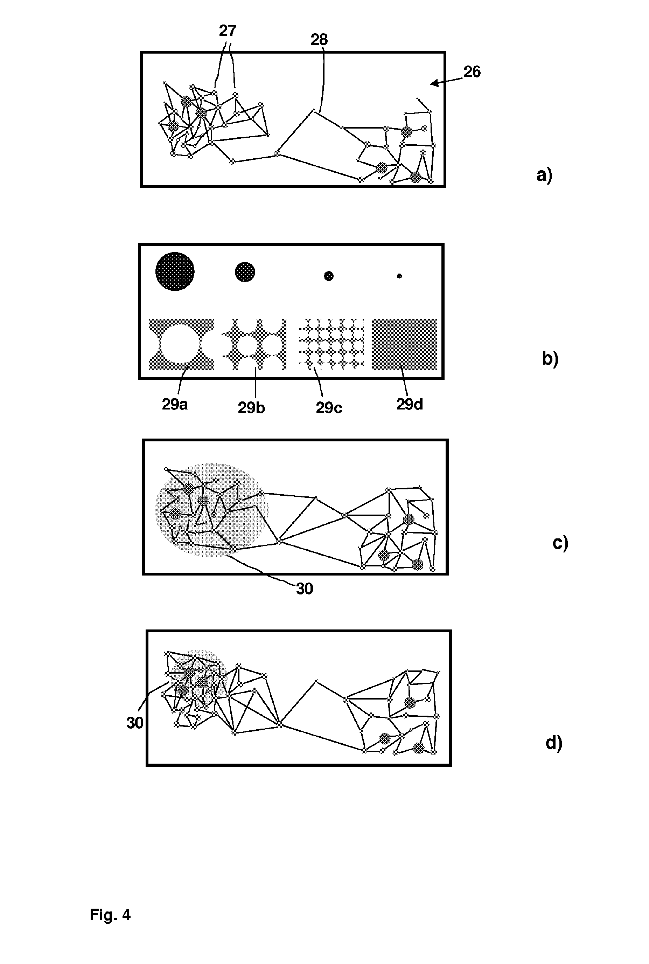

In Fig. 4, another, second embodiment of a graphical display 26 is shown.

The initial display 26 is shown in Fig. 4a. Every user is symbolised by a dot 27 that is presently showing the profile picture of the respective user (this feature can be transferred to other embodiments as well). Every friendship connection in the social network is indicated by a line 28. The displaying algorithm assumes some "adhesive strength" of every friendship connection line 28. By minimising the "overall potential energy" of the network, a display according to Fig. 4a will typically result, in which clusters of closely related users will develop. As an example, typically the class of high school students will form such a cluster. These clusters are "shown" as individual dots 27 that are closely spaced to each other. As an additional information, the individual user dots 27 in the display 26 are shown with different sizes. In the presently shown example, the user dots 27 can have one out of four different sizes (although a different number of sizes and/or a continuous variation of the size are possible as well). Therefore, closer friends of an individual (uploading) user 4 will be displaced larger as opposed to simple acquaintances. Furthermore, if the user moves the mouse pointer over a certain individual user dot 27 (irrespective of its size), the name of the respective user will be displayed till the mouse pointer is moved further on.

Now the user may select a number of users who are (potentially) eligible to access the uploaded information. For this he simply clicks one out of presently four filtering meshes 29, where the leftmost filtering mesh 29a chooses only the most close contacts, while by clicking the rightmost filtering mesh 29d, all (connected) contacts will initially have access to the uploaded information.

After selecting the filtering mesh 29 as shown in Fig. 4b, the uploading user 4 will choose as an additional selection criteria the cluster of users who will be (initially) allowed to access the uploaded information. This is done by simply clicking and dragging the mouse pointer to create a selection area 30 (see Fig. 4c).

Now the setup process is finished and the graphical display will dynamically modify to the situation as shown in Fig. 4d. Here, user dots (and hence users) which are socially not close enough (with respect to the filtering mesh 29 chosen in Fig. 4b) will be moved outside of the selection area 30, while the user dots that are sufficiently close (according to the filtering mesh choice) will remain inside the selection area 30.

Even now, the user is still permitted to individually add and/or remove certain users from access privileges, e.g. by clicking the respective user dot 27 and/or by a drag and drop operation of the respective user dot 27. To aid the uploading user 4 in this process, additional information about the respective user dot 27 can be displayed if the mouse pointer is moved over of the respective dot 27.

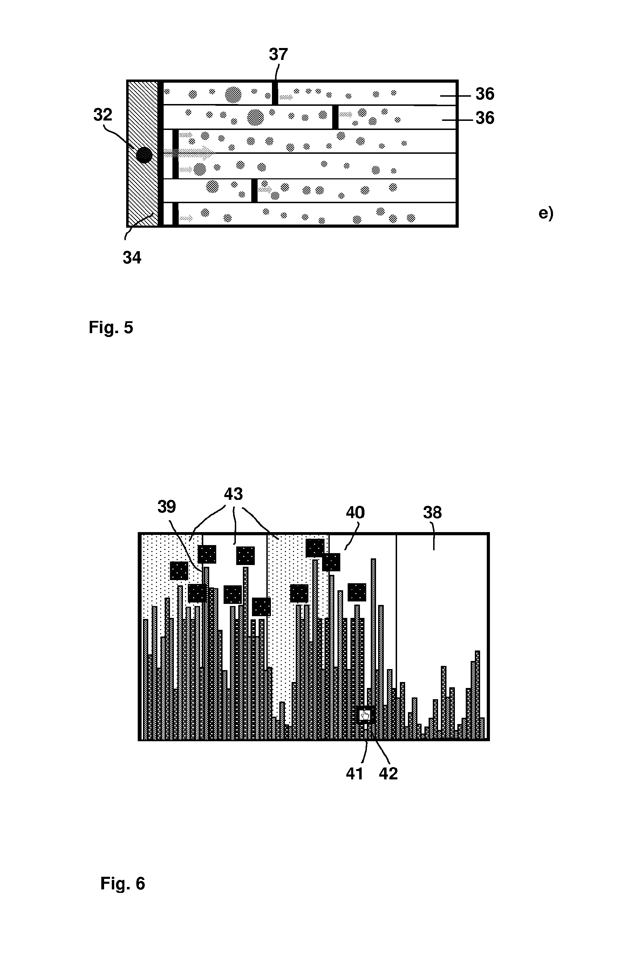

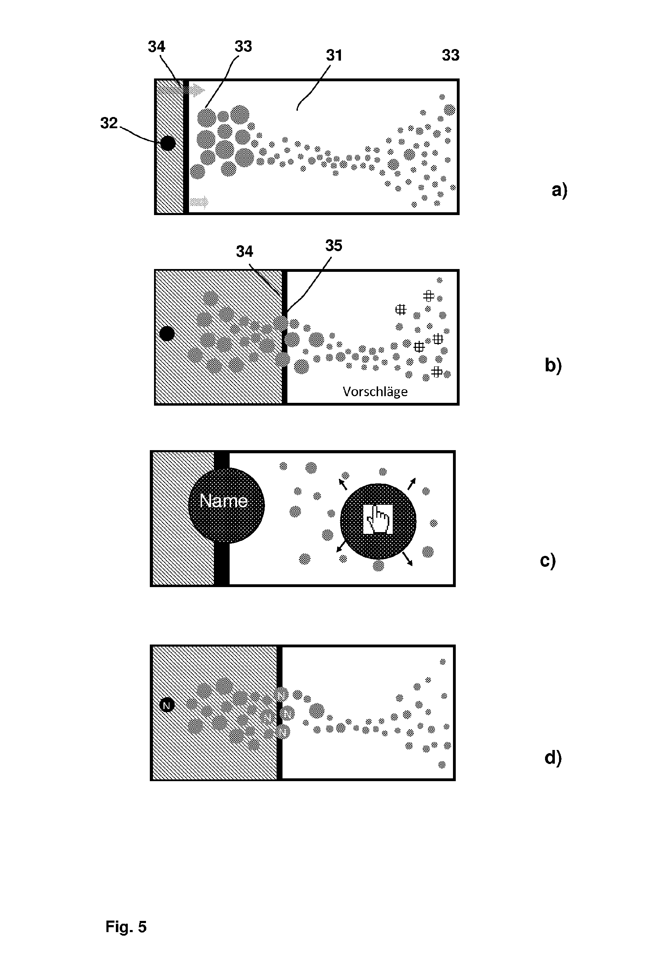

In Fig. 5, a third possible embodiment of a graphical display tool 31 is shown. The initial display 31 is shown in Fig. 5a. Here, the network of the uploading user (presently symbolised by user dot 32 ;for example shown in red) is once again shown as a number of user dots 33 with different sizes. The larger the respective dot 33 is, the closer the connection to the uploading user 32 is. Additionally, the size of the user dot 33 is accordingly large. Now the uploading user 32 selects the bordering line to whom the uploaded information is shown by simply dragging a slide bar 34 to the right or to the left. To simplify the process for him, the user dots 35 that are currently lying in the close vicinity of the slide bar 34 are enlarged and the name of the user is indicated. This way the uploading user 32 has a very good knowledge to whom the uploaded information is accessible. This is shown in Fig. 5b. Once the user has made his initial choice, he will leave the slide bar 34 at the appropriate position.

Nevertheless, the uploading user 32 is still allowed to manually select and/or deselect individual users, e.g. by clicking on the respective user dot 33 and/or by dragging and dropping the respective user dot 33 on the respective side of the slide bar 34. To simplify this selection process for him, a user dot 33 will be enlarged if the mouse pointer is moved on top of the respective dot (which is shown in Fig. 5c).

In Fig. 5d the result of such a selection process is indicated. As one can see, the uploading user 4 has chosen to bar certain relatively close friends from accessing the respective information; while on the other hand some of his more distant contacts will have access with the information.

A slight modification of the presently proposed scheme is shown in Fig. 5e. Here, the network is divided up into individual groups (for example sorted with respect to common interests, according to clusters in the sense of the embodiment shown in Fig. 4 or the like), where the individual groups are arranged in different lines 36 of the display. For every line 36, an individual slide bar 37 is provided. This way, sharing information that is sort of connected to certain group interests becomes easier for the uploading user 32. Nevertheless, an overall slide bar 34 is still provided that can be moved as a quick initial choice that can be modified (if desired) afterwards by individually moving some of the individual slide bars 37 and/or by a modifying the privileges of an individual user 33.

In Fig. 6, yet another possible embodiment of a graphical display 38 is illustrated. Here, the contacts are displayed as individual bars 39, forming some kind of a histogram. In the presently shown embodiment, an individual bar 39 is larger for closer friends. Contacts above a certain threshold level will additionally be displayed with an icon 40, showing a profile picture, for example.

Independent of this, moving the mouse pointer in the vicinity of the lower edge of the display 38, some additional information will be displayed 42 for the bar 39 (representing a certain user) that lies directly under the mouse pointer 41. The uploading user can be provided with a variety of sorting options. In the presently shown embodiment, the individual users are grouped into a plurality of interest groups 43. The interest groups 43 can be sorted in accordance to a common interest, where the order in which they appear on the display 38 can follow the alphabetic order of the respective keyword. Within each group 43, the respective user bars 39 can be sorted alphabetically as well.

A privacy selection can be made by moving a slide bar from top to bottom (or vice versa). Every bar 39 exceeding the current threshold will have access to the uploaded information. In addition, an individual modification can be done by clicking and/or by a drag and drop operation of the respective user bar 39.

### Reference list

- 1.: social network arrangement
- 2.: server
- 3.: client
- 4.: user (uploading information)
- 5.: other user
- 6.: network
- 7.: processor
- 8.: memory
- 9.: program
- 10.: program module
- 11.: database
- 12.: flowchart
- 13.: initiating data transfer
- 14.: display data form
- 15.: upload of information
- 16.: graphical display about access scheme
- 17.: storage step
- 18.: graphical display
- 19.: own dot
- 20.: other user dot (close friend)
- 21.: other user dot (colleague)
- 22.: other user dot (acquaintance)
- 23.: selected user
- 24.: selection area
- 25.: enlarged user dot
- 26.: display
- 27.: user dot
- 28.: friendship connection
- 29.: filtering mesh
- 30.: selection area
- 31.: graphical display
- 32.: uploading user dot
- 33.: user dot
- 34.: slide bar
- 35.: user dots under slide bar
- 36.: line
- 37.: group slide bar
- 38.: display
- 39.: bar
- 40.: icon
- 41.: mouse pointer
- 42.: additional information
- 43.: interest group

## Claims

1. Method (12) for controlling the access to information in a social network (1), wherein information will be accessible by different users (4, 5) based on a social distance value that is assigned to each user (4, 5), wherein the user (4) providing said information decides on a limiting social distance value, wherein users (5) having a lower social distance value have access to said information and wherein users (5) having a higher social distance value do not have access to said information, **characterised in that** the user (4) providing said information can modify the access permission individually on a user-by-user (5) basis.

2. Method (12) according to the preamble of claim 1, in particular according to claim 1, **characterised in that** the decision on the limiting social distance value and/or said individual modification of the access permission is performed using graphical means, in particular a graphical representation (18, 26, 31, 38) of the social distance value and/or a graphical representation of the users (4, 5) of the social network (1).

3. Method (12) according to claim 1 or 2, **characterised in that** said individual modification of the access permission of a certain user (5) will modify the social distance value of said user (5).

4. Method (12) according to any of the preceding claims, **characterised in that** said social distance value comprises at least one essentially continuous number.

5. Method (12) according to any of the preceding claims, **characterised in that** said social distance value is a multi-dimensional value and preferably comprises additional information about certain types of information that can be shared, past communications, common interests and/or already shared information.

6. Method (12) according to any of the preceding claims, **characterised in that** second level connections are used for a modification of the limiting social distance value, for a modification of the social distance value and/or for influencing a graphical representation (18, 26, 31, 38).

7. Method (12) according to any of the preceding claims, **characterised in that** an individual modification of an access permission immediately alters the graphical representation (18, 26, 31, 38) and/or the limiting social distance value and/or the social distance value.

8. Method (12) according to any of the preceding claims, **characterised in that** the social distance value is graphically represented by a size of an icon (20, 21, 23, 27, 33), by a distance of an icon (20, 21, 23, 27, 33) from a certain position (19, 32), by a colour of an icon (19, 20, 21, 23, 27, 32, 33), by a shape of an icon, by an angular position of an icon, by at least one lateral position of an icon (32, 33) and/or by a histogram (38) .

9. Method (12) according to any of the preceding claims, **characterised in that** the limiting social distance value is graphically represented by an area (24, 30) and/or a volume, by at least one bordering line, by at least one slide bar (34, 37) and/or by at least one icon.

10. Method (12) according to any of the preceding claims, **characterised in that** additional information (25, 35) can be temporarily displayed.

11. Method (12) according to any of the preceding claims, **characterised in that** the social distance value is a directional social distance value.

12. Method (12) according to any of the preceding claims, **characterised in that** said method is a computer implemented method.

13. A social network system (1) that is arranged for implementing a method (12) as claimed in any one of claims 1 to 12.

14. Computer program product comprising code instructions for carrying out the method as claimed in any one of claims 1 - 12, when loaded and run on a computer means (2, 3).

15. A device (2, 3), in particular a computer means, being designed and arranged in a way to perform a method (12) according to any one of claims 1 to 12.
